# EUROPEAN PATENT SPECIFICATION

(11) **EP 3 393 899 B1**
(45) Date of publication and mention of the grant of the patent: **18.03.2020**
(21) Application number: 16831642.0
(22) Date of filing: 20.12.2016
(51) Int. Cl.: B62M 15/00

(54) **CYCLE AND A DRIVE MECHANISM THEREFOR**
ZYKLUS UND ANTRIEBSMECHANISMUS DAFÜR
CYCLE ET MÉCANISME D'ENTRAÎNEMENT ASSOCIÉ

(30) Priority: 24.12.2015 IL 24321815
(43) Date of publication of application: 31.10.2018
(73) Proprietor: Shacham, Uri, 4500956 Hod Hasharon (IL)
(72) Inventor: Shacham, Uri, 4500956 Hod Hasharon (IL)
(74) Representative: Swindell & Pearson Limited
(86) International application number: PCT/IL2016/051361
(87) International publication number: WO 2017/109779

(56) References cited:
- WO-A1-2009/028933
- CN-U- 203 767 015
- KR-A- 20150 029 320
- KR-B1- 100 268 131

## Description

### TECHNOLOGICAL FIELD

The presently disclosed subject matter relates to cycles, and to drive mechanisms for transmitting an input force to a wheel thereof.

### BACKGROUND

Cycles are common human-powered, pedal-driven vehicles, having two or more wheels attached to a frame. For example, a bicycle has two wheels, one behind the other in a single-track configuration.

Typically, a rider operates a pedal-crank mechanism with his feet to operate a chain connected to a rear wheel. The operation of the chain provides a rotational force to the wheel, thereby driving the cycle forward.

Other mechanisms have been suggested for transferring to rotational force from the pedal-crank mechanism to the rear wheel without using a chain. For example, CN2133514 discloses a multi-stage variable-speed bicycle, having a dual crank and connecting rod drive Document KR 100 268 131 B1 shows a cycle having a drive mechanism comprising an input assembly, an output assembly, and a transmission system functionally connecting therebetween, wherein:
- said input assembly defines a rotational drive axis via which an input force is provided, and first and second drive points spaced from said drive axis, and is configured to harness said input force to produce an angular motion of said drive points about said drive axis;
- said output assembly defines a rotational wheel axis and first and second wheel points spaced from said wheel axis, and is configured for being driven by the angular motion of said drive points such that said wheel points rotate about said wheel axis; and
- said transmission system is configured for facilitating transmission of motion from said input assembly to said output assembly, and comprises a first transmission member pivotally articulated, at a first end thereof, with respect to said first drive point and, at a second end thereof, with respect to said first wheel point, and a second transmission member pivotally articulated, at a first end thereof, with respect to said second drive point and, at a second end thereof, with respect to said second wheel point.

### SUMMARY

According to one aspect of the presently disclosed subject matter, there is provided a cycle having a drive mechanism comprising an input assembly, an output assembly, and a transmission system functionally connecting therebetween, wherein:
- the input assembly defines a rotational drive axis via which an input force is provided, and first and second drive points spaced from the drive axis, and is configured to harness the input force to produce an angular motion of the drive points about the drive axis;
- the output assembly defines a rotational wheel axis and first and second wheel points spaced from the wheel axis, and is configured for being driven by the angular motion of the drive points such that the wheel points rotate about the wheel axis; and
- the transmission system is configured for facilitating transmission of motion from the input assembly to the output assembly, and comprises a first transmission member pivotally articulated, at a first end thereof, with respect to the first drive point and, at a second end thereof, with respect to the first wheel point, and a second transmission member pivotally articulated, at a first end thereof, with respect to the second drive point and, at a second end thereof, with respect to the second wheel point.

It will be appreciated that the terms "bicycle," "cycle," and other similar terms as used herein the specification and claims is intended to include any suitable human-powered pedal-driven vehicle, including, but not limited to, bicycles, tricycles, etc.

The cycle may further comprise a pedal-crank assembly configured for being borne on by a user to be rotated about the drive axis.

The pedal-crank assembly may comprise two crank arms rigidly connected to the input assembly and define a pedal phase angle between:
- a longitudinal axis of one of the crank arms; and
- a line connecting the first drive point and the drive axis;
wherein the pedal phase angle is constant during use of the cycle.

The cycle may be provided such that:
- the input assembly comprises first and second drive plate members rigidly attached to each other, configured to rotate about the drive axis and each associated, respectively, with one of the first and second drive points;
- the output assembly comprises first and second wheel plate members rigidly attached to each other, configured to rotate about the wheel axis and each associated, respectively, with one of the first and second wheel points; and
- each of the transmission members is formed with a round plate-receiving aperture at each end thereof receiving one of the plate members therein, such that rotation of each drive plate member about the drive axis operates a respective transmission member to rotate a corresponding wheel plate member about the wheel axis.

At least one of the plate members may be formed as a disk and be coaxially fitted within its respective plate-receiving aperture.

The drive mechanism may further comprise a friction-reducing arrangement configured to reduce friction between the at least one plate member and its respective plate-receiving aperture.

The friction-reducing arrangement may comprise a rolling-element bearing, which may comprise one or more selected from the group including cylindrical roller bearings and ball bearings.

The plate members received within one of the transmission members may be larger than the plate members received within the other of the transmission members.

The first and second drive points may be angularly separated from each other by a drive displacement angle between about 30° and about 150°. The drive displacement angle may be between about 45° and about 135°. The drive displacement angle may be between about 80° and about 100°. The drive displacement angle may be about (or exactly) 90°.

The first and second wheel points may be angularly separated from each other by a wheel displacement angle which is about the same as the drive displacement angle.

The cycle may further comprise an internal-gear hub with a driver thereof being connected to the output assembly for being rotated thereby.

According to another aspect of the presently disclosed subject matter, there is provided a drive mechanism for a cycle, the drive mechanism comprising an input assembly, an output assembly, and a transmission system functionally connecting therebetween, wherein:
- the input assembly defines a rotational drive axis via which an input force is provided, and first and second drive points spaced from the drive axis, and is configured to harness the input force to produce an angular motion of the drive points about the drive axis;
- the output assembly defines a rotational wheel axis and first and second wheel points spaced from the wheel axis, and is configured for being driven by the angular motion of the drive points such that the wheel points rotate about the wheel axis; and
- the transmission system is configured for facilitating transmission of motion from the input assembly to the output assembly, and comprises a first transmission member pivotally articulated, at a first end thereof, with respect to the first drive point and, at a second end thereof, with respect to the first wheel point, and a second transmission member pivotally articulated, at a first end thereof, with respect to the second drive point and, at a second end thereof, with respect to the second wheel point.

The drive mechanism may further comprise a pedal-crank assembly configured for being borne on by a user to be rotated about the drive axis.

The pedal-crank assembly may comprise two crank arms rigidly connected to the input assembly and define a pedal phase angle between:
- a longitudinal axis of one of the crank arms; and
- a line connecting the first drive point and the drive axis;
wherein the pedal phase angle is constant during use of the cycle.

The transmission members may be configured to facilitate adjustment of the distance between the drive and wheel axes.

The drive mechanism may be provided such that:
- the input assembly comprises first and second drive plate members rigidly attached to each other, configured to rotate about the drive axis and each associated, respectively, with one of the first and second drive points;
- the output assembly comprises first and second wheel plate members rigidly attached to each other, configured to rotate about the wheel axis and each associated, respectively, with one of the first and second wheel points; and
- each of the transmission members is formed with a round plate-receiving aperture at each end thereof receiving one of the plate members therein, such that rotation of each drive plate member about the drive axis operates a respective transmission member to rotate a corresponding wheel plate member about the wheel axis.

At least one of the plate members may be formed as a disk and be coaxially fitted within its respective plate-receiving aperture.

The drive mechanism may further comprise a friction-reducing arrangement configured to reduce friction between the at least one plate member and its respective plate-receiving aperture.

The friction-reducing arrangement may comprise a rolling-element bearing, which may comprise one or more selected from the group including cylindrical roller bearings and ball bearings.

The plate members received within one of the transmission members may be larger than the plate members received within the other of the transmission members.

The drive mechanism may further comprise a round adjustment element rotatably received within an accommodating aperture formed in an end of the transmission member, the adjustment element comprising the plate-receiving aperture formed eccentrically therein.

The drive mechanism may be configured for arresting the adjustment element at a plurality of angular positions within the accommodating aperture.

The first and second drive points may be angularly separated from each other by a drive displacement angle between about 30° and about 150°. The drive displacement angle may be between about 45° and about 135°. The drive displacement angle may be between about 80° and about 100°. The drive displacement angle may be about (or exactly) 90°.

The first and second wheel points may be angularly separated from each other by a wheel displacement angle which is about the same as the drive displacement angle.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
Fig. 1A is a perspective view of portion of a cycle according to the presently disclosed subject matter;
Fig. 1B is a partially exploded view of the cycle illustrated in Fig. 1B;
Figs. 1C and 1D are perspective views of portion of modifications of the cycle illustrated in Fig. 1A;
Fig. IE is a perspective view of a modification of a transmission member of the cycle illustrated in Fig. 1A;
Figs. 1F and 1G are perspective views, in closed and open positions, respectively, of another modification of a transmission member of the cycle illustrated in Fig. 1A;
Fig. 2 illustrates a displacement angle between drive and wheel points of, respectively, drive and wheel plates of a transmission system of the cycle illustrated in Fig. 1A;
Figs. 3A through 3H illustrate relative positions of the drive and wheel plates as they rotate about, respectively, drive and wheel axes of the transmission system of the cycle illustrated in Fig. 1A;
Figs. 4A through 4H are side views of the cycle illustrated in Fig. 1A at progressive positions of the transmission system thereof;
Figs. 5 and 6 are perspective views of modifications of the cycle illustrated in Fig. 1A;
Fig. 7 is a perspective view of an adjustable transmission member according to another modification of the cycle illustrated in Fig. 1A;
Fig. 8 is a perspective view of a portion of a further modification of the cycle illustrated in Fig. 1A;
Figs. 9A and 9B are perspective views of modifications of the cycle illustrated in Fig. 1A at different pedaling positions thereof; and
Figs. 9C and 9D are partial top views of portions of the cycle illustrated in Figs. 9A and 9B, respectively.

### DETAILED DESCRIPTION

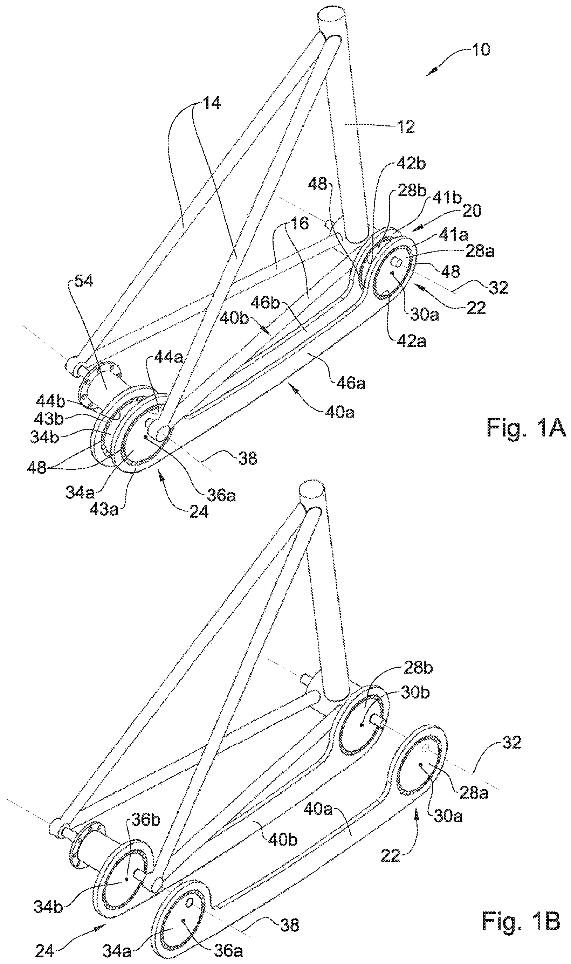

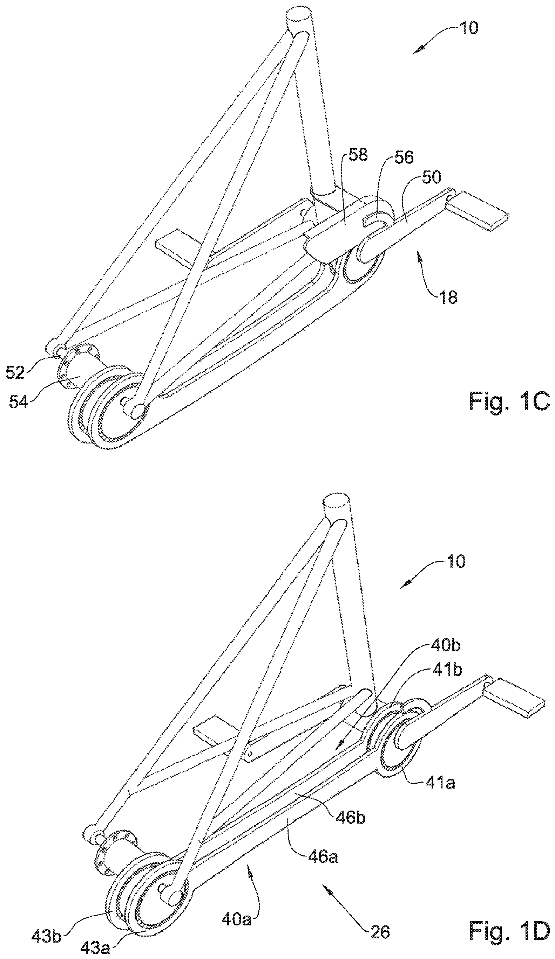

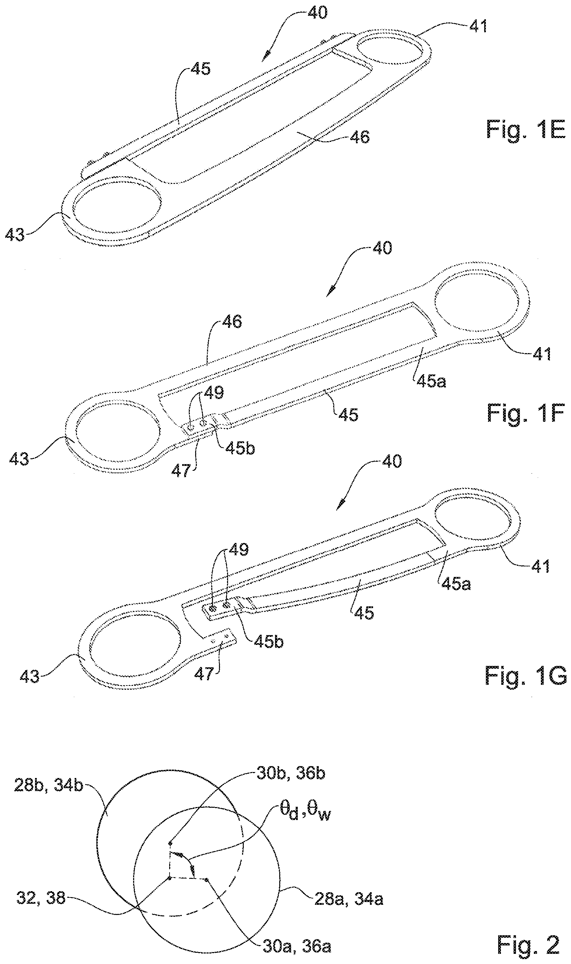

As illustrated in Figs. 1A and 1B, there is provided a cycle, which is generally indicated at 10, according to the presently disclosed subject matter. For clarity of the disclosure, only a rearmost portion of a frame of the cycle 10 is illustrated in Fig 1, which comprises a seat tube 12, seatstays 14, chainstays 16, and a pedal-crank assembly 18 (illustrated in Fig. 1C). However, it will be appreciated that the present disclosure implicitly discloses the entire frame and cycle, including, but not limited, other portions of the frame (e.g., the top tube, down tube, head tube, wheels, brakes, handlebars, saddle, etc.). In addition, while examples herein refer to a cycle lacking a chain, the name "chainstay" is being used herein, as the element indicated by reference numeral 16 is located where the chainstay on a traditional cycle would be located. The cycle 10 further comprises a drive mechanism, which is generally indicated at 20.

The drive mechanism 20 comprises an input assembly 22, an output assembly 24, and a transmission system 26. The input assembly 22 is configured to harness an input force, typically a pedaling force applied by a rider, e.g., via a pedal-crank assembly (not illustrated), but may from any other suitable source, such as an electric motor, etc., or a combination of these or other sources. The output assembly 24 is configured for being driven by the input assembly 22 to produce an angular force, for example to drive a wheel (not illustrated) of the cycle 10. The transmission system 26 is configured to facilitate transmission of force from the input assembly 22 to the output assembly 24.

According to some examples, the input assembly 22 comprises round first and second drive plates 28a, 28b, parallely arranged and rigidly attached to each other, for example being formed as a single element, so as to move in tandem. (Herein the specification and claims, separate elements indicated by reference numerals differing only in an appended letter, may be referred to collectively by the reference numeral when lacking an appended letter, e.g., 28a and 28b may be referred to collectively by reference numeral 28, etc.) The first drive plate 28a defines a first drive point 30a, which may be at the center thereof; similarly, the second drive plate 28b defines a second drive point 30b, which may be at the center thereof. In addition, the input assembly 22 defines a drive axis 32, being an axis of rotation thereof (i.e., the input assembly is configured to be rotated thereabout) passing through the plate elements 28 at points spaced from the drive points 30. Accordingly, the drive points 30 rotate about the drive axis 32 when the input assembly 22 is rotated thereabout.

The drive points 30 are angularly separated from each other by a drive displacement angle *θ_{d}*, which, as illustrated in Fig. 2, is the smaller (i.e., non-reflex) angle formed between two lines, each line being defined by the intersection of the drive axis 32 with a plane perpendicular thereto, and the perpendicular projection of one of the drive points 30 on the plane. Thus, one of the drive points 30 "leads" the other by the drive displacement angle *θ_{d}*. According to this presentation, the angular separation between the drive points 30 is the rotation the drive assembly 22 must undergo about its drive axis 32 for the perpendicular projection of the "trailing" drive point to reach the original (i.e., before the rotation) perpendicular projection of the "leading" drive point.

According to some examples, the drive displacement angle *θ_{d}* is about or exactly 90°. According to other examples, it is between about 30° and about 150°, for example between about 45° and about 135°, or between about 80° and about 100°.

Similarly, and reverting to Figs. 1A and 1B, the output assembly 24 comprises round first and second wheel plates 34a, 34b, parallely arranged and rigidly attached to each other, so as to move in tandem. The first wheel plate 34a defines a first wheel point 36a, which may be at the center thereof; similarly, the second wheel plate 34b defines a second wheel point 36b, which may be at the center thereof. In addition, the output assembly 24 defines a wheel axis 38, being an axis of rotation thereof (i.e., the output assembly is configured to be rotated thereabout) passing through the wheel elements 34 at points spaced from the wheel points 36. Accordingly, the wheel points 36 rotate about the wheel axis 38 when the output assembly 24 is rotated thereabout. According to some examples, the output assembly 24 is provided with a quick-disconnect arrangement (not illustrated), configured to facilitate easy removal of the rear wheel of the cycle 10, while reducing or avoiding slippage between the output assembly and the wheel. The quick-disconnect arrangement may comprise a spline for this purpose, or be of any other suitable design.

The wheel points 36 are angularly separated from each other by a wheel displacement angle *θ_{w}*, which, reverting to Fig. 2, is the smaller (i.e., non-reflex) angle formed between two lines, each line being defined by the intersection of the wheel axis 38 with a plane perpendicular thereto, and the perpendicular projection of one of the wheel points 36 on the plane. Thus, one of the wheel points "leads" the other by the wheel displacement angle *θ_{w}*. The wheel displacement angle *θ_{w}* may be the same as the drive displacement angle *θ_{d}*.

The transmission system 26 comprises a first transmission member 40a extending between the first drive plate 28a and the first wheel plate 34a, and a second transmission member 40b extending between the second drive plate 28b and the second wheel plate 34b. The transmission members 40 comprise transmission bars 46a, 46b extending between respective front ends 41a, 41b and rear ends 43a, 43b thereof. The front ends 41a, 41b are each formed with a round drive-plate receiving aperture 42a, 42b designed so as to receive one of the drive plates 28 for rotation therewithin. The rear ends 43a, 43b are each formed with a round wheel-plate receiving aperture 44a, 44b designed so as to receive one of the wheel plates 34 for rotation therewithin. Although the transmission bars 46 are illustrated as extending between the plate receiving apertures 42, 44 off-center therefrom (i.e., spaced from an axis connecting centers of the plate receiving apertures) and therebelow, the transmission system 26 may be provided such that the transmission bars are off-center and above the plate receiving apertures, or in any other suitable configuration, without departing from the scope of the presently disclosed subject matter, *mutatis mutandis.*

The transmission system 26 may be designed such that the first transmission bar 46a (i.e., that which "leads" the other) is stronger than the second transmission bar 46b, as it is subject to a higher load. Accordingly, it may be made of a stronger material, have greater dimensions, and/or be provided according to any other suitable design which imparts a higher strength thereto, than the second transmission bar 46b.

A friction-reducing arrangement, such as ball bearings 48, cylindrical roller bearings, or any other rolling-element bearing (sealed or otherwise), or another suitable arrangement, may be provided between each plate 28, 34 and its respective plate receiving aperture 42, 44.

As each of the plate receiving apertures 42, 44 is round, and receives therein a round plate 28, 34, rotation of a plate 28, 34 is concentric with its respective plate receiving aperture 42, 44, and is about the respective drive point 30/wheel point 36 of each plate.

The drive mechanism 20 is mounted on the cycle 10 such that the drive axis 32 and wheel axis 38 lie along rotational members thereof. Accordingly, a rotational axle of the pedal-crank assembly 18, i.e., the member which connects the crank-arms 50 (seen in Fig. 1C) thereof and which rotates when a rider pedals the cycle 10 by bearing thereupon, lies along the drive axis 32, and is connected in the vicinity thereof to the input assembly 22, e.g., to the drive plates 28 thereof, to facilitate rotation of the input assembly by rotation of the pedal-crank mechanism.

Similarly, a wheel axle 52 lies along the wheel axis 38, and is attached in the vicinity thereof to the output assembly 24. According to some examples, an internal-gear hub 54, carrying the wheel (not illustrated) may be mounted on the wheel axis 38, with a driver (i.e., input shaft, not seen) thereof being connected to the output assembly 24 in the vicinity of the wheel axis 38, thereby implementing a gear-ratio changing system.

According to other examples, any other suitable axially disposed speed-changing device may be provided, powered by the output assembly 24 and connected to the rear wheel to provide power thereto, and may provide fixed and/or variable gear ratios and/or provide for free-wheeling. Such devices may include, but not limited to, one or more of a continuously variable transmission for example as manufactured and marketed by Fallbrook Technologies Inc. under the trade name NuVinci®, a hydraulic transmission, a wheel-hub motor, a planetary gear train, etc., without departing from the scope of the presently disclosed subject matter, *mutatis mutandis.*

According to some modifications, the axially disposed speed-changing device (such as the internal-gear hub 54 as shown, or any other suitable mechanism), may be provided on the drive axis 32, and be connected between the pedal-crank assembly 18 and the input assembly 22, either in addition to or instead of on the wheel axis 38, *mutatis mutandis.*

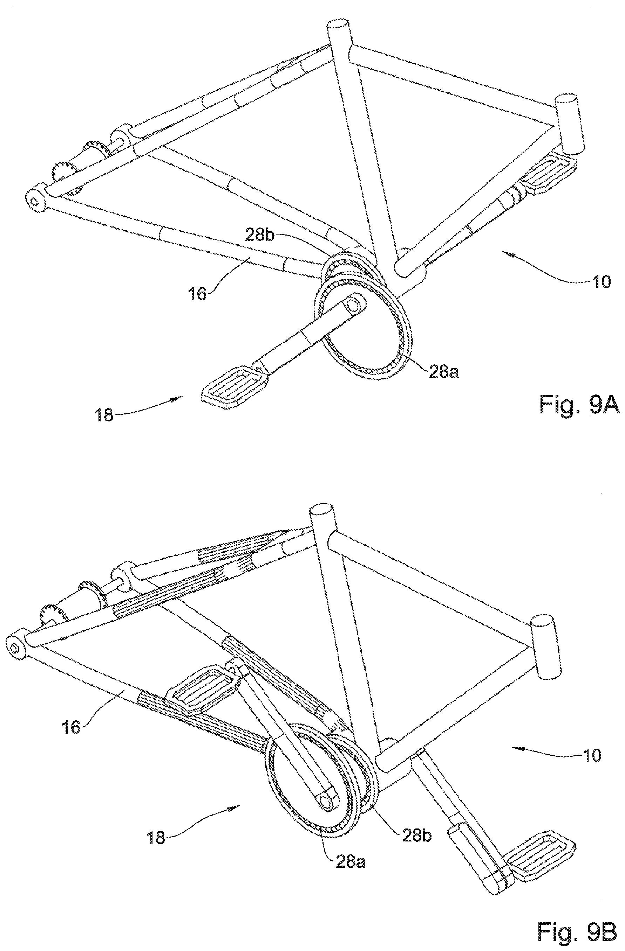

According to some examples, for example as illustrated in Fig. 1C, a counterweight 56 may be provided on one or both of the crank-arms 50, e.g., to facilitate smooth pedaling by the rider. According to other examples, the cycle 10 is provided with a guard element 58 mounted over the front end 41 of at least one of the transmission members 40, e.g., to shield the rider from moving parts of the transmission system 26. It will be appreciated that although both the counterweight 56 and guard element 58 are illustrated in Fig. 1C, they may be provided independently of each other. In addition, the guard element 58 and/or the counterweight 56 may be modified such that the guard elements shields the rider from the counterweight, *mutatis mutandis.* It will be appreciated that the counterweight 56 may be of any suitable design, for example attached to an interior side of a crank-arm 50, such as illustrated in Fig. 9B.

According to modifications (not illustrated), a counterweight may be provided connected to the wheel axle, for example connected to the output assembly 24, a rear wheel, etc., *mutatis mutandis,* either in addition to or instead of one provided on one or both crank-arms 50, e.g., as described above with reference to Fig. 1C.

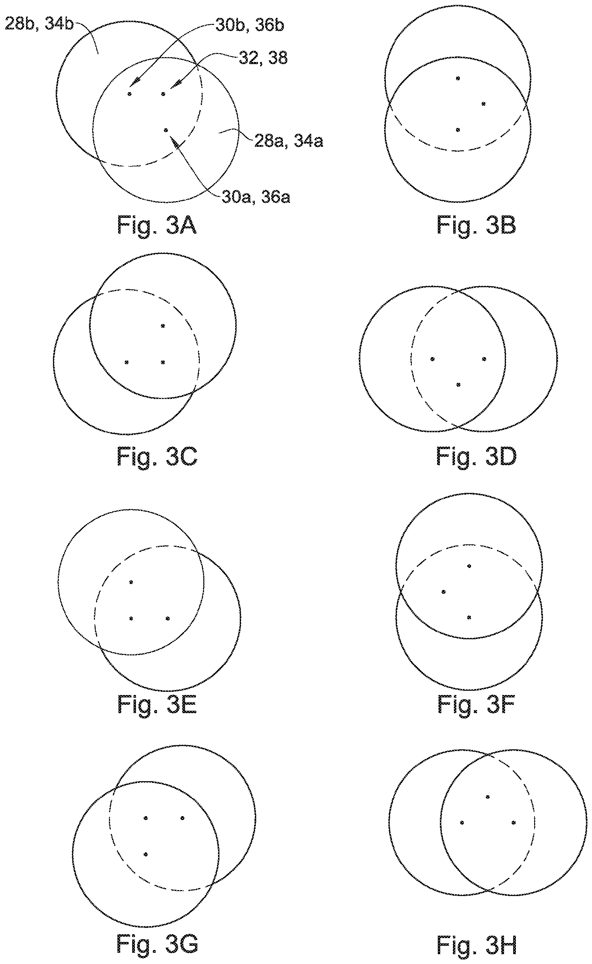

In operation, the input assembly 22 is rotated about its drive axis 32, for example by a rider using the pedal-crank assembly 18, resulting in each of the drive plates 28 rotating about the drive axis. Owing to the eccentricity of the drive axis 32 relative to each of the drive plates 28, this rotation is characterized by each of the drive points 30 rotating about the drive axis, i.e., the drive plates each rotate eccentrically, such as illustrated in Figs. 3A through 3H, which illustrate the relative positions of the drive plates as they rotate about the drive axis, as well as the drive displacement angle *θ_{d}* (for clarity, the elements and points illustrated therein are only indicated in Fig. 3A). The rotation of each of the drive plates 28 within its respective drive-plate receiving aperture 42 actuates the front ends 41 of the transmission members 40 to rotate eccentrically about the drive axis 32. This motion is transmitted by the transmission bar 46 to the rear ends 43 of the transmission members 40.

As the rear ends 43 are constrained to rotate about the wheel axis 38 in a similar manner that the front ends 41 are constrained to rotate about the drive axis 32, the rotations of the front ends are replicated by the rear ends, i.e., the rear ends rotate eccentrically about the wheel axis 38. The rotations of the rear ends 43 actuates each of the wheel plates 34 to rotate within its respective wheel-plate receiving aperture 44 eccentrically about the wheel axis 38, i.e., such that the output assembly 24 rotates with each of the wheel points 36 rotating about the wheel axis, as illustrated in Figs. 3A through 3H, which illustrate, in addition to the relative positions of the drive plates 28 as they rotate about the drive axis 32 as described above, the relative positions of the wheel plates as they rotate about the wheel axis, as well as the wheel displacement angle *θ_{w}*. An axle, for example a wheel axle 52 or driver of an internal-gear hub 54, attached to the output assembly 24 is thus rotated, turning a wheel of the cycle 10. Accordingly, the drive mechanism 20 may be used to facilitate driving a wheel by applying a force to the input assembly 22.

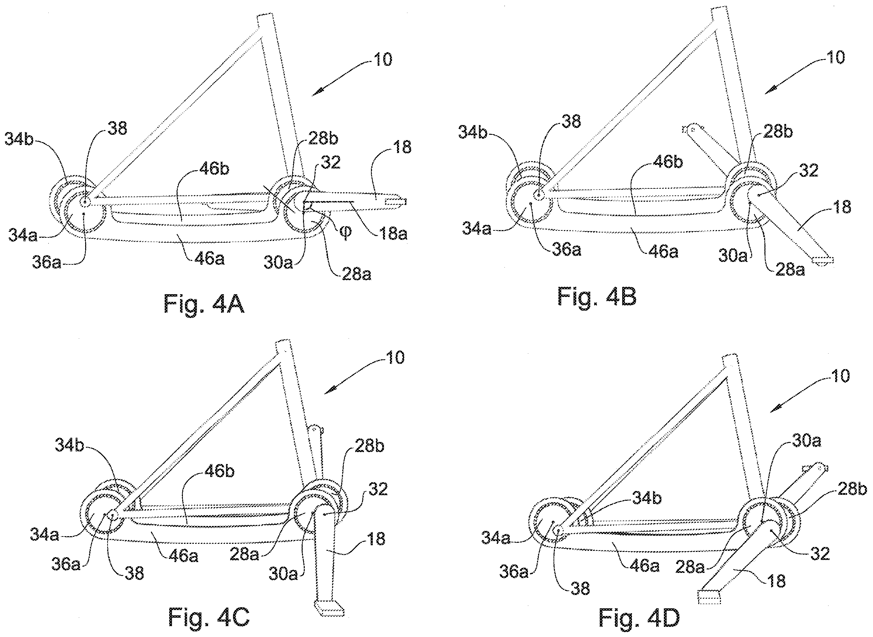

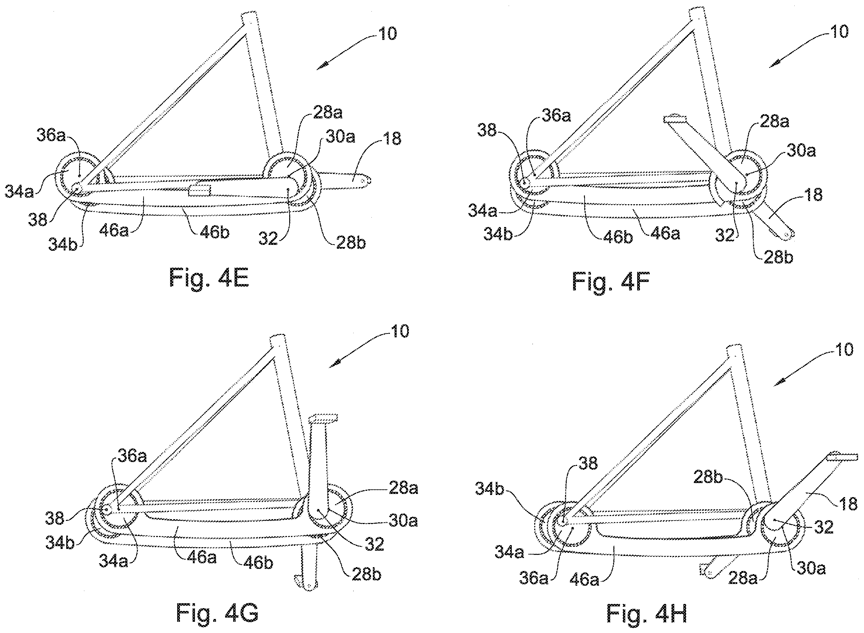

This effect of this motion on the drive mechanism 20 is illustrated in Figs. 4A through 4H, which correspond, respectively, to the positions illustrated in Figs. 3A through 3H. Taken together, Figs. 3A through 4H illustrate a non-limiting example in which the first drive point 30a is disposed such that it "leads" an adjacent crank-arm 50 of the pedal-crank assembly 18 by 90°, i.e., a pedal phase angle ϕ formed between a longitudinal axis 18a the crank-arm 18 and a line connecting the first drive point 30a and the drive axis 32 makes an angle of 90° (illustrated in Fig. 4A). According to some example, the pedal angle ϕ is less than 90°, for example about 45°. It will be appreciated that the pedal angle ϕ may be chosen by the designer, for example to balance the stress applied to the transmission bars 45 during use. It will be appreciated that the pedal phase angle ϕ is constant, i.e., it does not change during use of the cycle.

The transmission system 26 may be provided such that the transmission bars 46 extend substantially between the centers of the front and rear ends 41, 43, for example as illustrated in Fig. 1D.

As illustrated in Fig. 1E, one or both of the transmission members 40 may be provided with a second transmission bar 45, e.g., as a separate member attachable to the front and rear ends 41, 43, for example to provide extra strength to the transmission system 26. As illustrated, the front and rear ends 41, 43 may be modified to accommodate attachment thereto of the second transmission bar 45, *mutatis mutandis.*

As illustrated in Figs. IF and 1G, the second transmission bar 45 may be formed as a unitary part of the transmission member 40, with a proximal end 45a attached to a first of the ends (i.e., either the front end 41 or rear end 43) thereof, and a distal end 45b separate from a second of the ends. For example, the second transmission bar 45 may be flexible such that the distal end 45b may be flexed away from a connection point 47 in the vicinity of the second end of the transmission member 40 (as in Fig. 1G), for example to facilitate installation of the transmission bar on a cycle frame or removal therefrom. The second transmission bar 45 may be configured to be flexed out of the plane of the transmission member 40 as illustrated, or within the place, for example toward or away from the first transmission bar 40. Fastening members 49, such as bolts, may be provided to secure the distal end 45b to the connection point 47 when the second transmission bar 45 is in a closed position, i.e., with the distal end thereof adjacent the connection point 47 (as in Fig. IF).

The drive mechanism 20 may be configured to facilitate harnessing one or more auxiliary input sources, either together with (i.e., supplementing/boosting) a pedaling force as described above, or such that a rider may selectively disengage the pedaling input force or one or more of the auxiliary input forces.

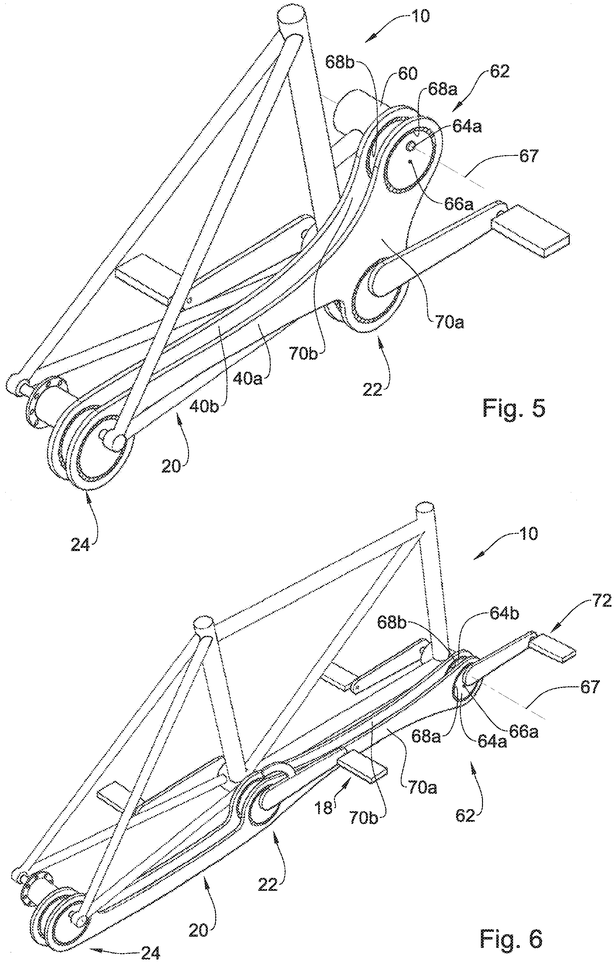

According to a modification of any of the examples described above with reference to and illustrated in the accompanying figures, for example as illustrated in Fig. 5, the drive mechanism 20 may be configured to harness an input force provided by a motor 60. Accordingly, drive mechanism 20 comprises an auxiliary input arrangement 62 similar to the input and output arrangements 22, 24 as described above with reference to Figs. 1A through 4H, i.e., comprising round first and second auxiliary drive plates 64a, 64b defining first and second auxiliary drive points 66a and 66b (second auxiliary drive point 66b not illustrated), and an auxiliary drive axis 67, being an axis of rotation of the auxiliary input arrangement, and which is coincident with the motor axis. The transmission system 26 is similar to that described above with reference to Figs. 1A through 4H, with the modification that the transmission members 40 further comprise round first and second auxiliary-plate receiving apertures 68a, 68b connected to the front ends 41a, 41b by first and second auxiliary transmission bars 70a, 70b. A free-wheel mechanism (not illustrated), such as is known in the art, may be provided connecting the pedal-crank assembly 18 to the drive plates 28, thereby facilitating the motor 60 to operate the drive mechanism 20 without the pedal-crank assembly 18 rotating, allowing the rider to rest.

It will be appreciated that while the drive mechanism 20 described above with reference to and illustrated in Fig. 5 is configured with the motor 60 in front of the input assembly 22, it may be designed in any other suitable manner without departing from the scope of the presently disclosed subject matter, *mutatis mutandis.* For example, the motor 60 may be disposed farther rearward on the cycle 10. In addition, the transmission system 26 may be provided such that the auxiliary-plate receiving apertures 68 are connected by the auxiliary transmission bars 70 to rear ends 43 of the transmission member 40.

According to another modification of any of the above examples, such as illustrated in Fig. 6, the drive mechanism 20 may be configured to harness an input force provided by a second rider, for example to facilitate its use with a tandem bicycle. The drive mechanism 20 is similar to that described above with reference to and illustrated in Fig. 5, with the auxiliary transmission bars 70 extending approximately linearly with the (primary) transmission bars 40. In addition, an auxiliary pedal-crank assembly 72 is provided, connected to the auxiliary input arrangement 62 to facilitate rotation thereof by rotation of the auxiliary pedal-crank mechanism. One or both of the pedal-crank and auxiliary pedal-crank assemblies 18, 72 may be connected to its respective drive plates 28, 64 by a free-wheel mechanism (not illustrated), such as is known in the art, thereby facilitating one of the riders to stop pedaling, without his pedal-crank assembly rotating.

The design of the drive mechanism 20 as described above with reference to and illustrated in Fig. 6 dictates a phase angle between the input assemblies 18, 72 thereof, i.e., the difference in the angles (i.e., each relative to its respective drive axis 32, 66 and a reference line point, such as a vertical line passing through the axis) of corresponding drive points 30, 66 (i.e., those associated with the same transmission member 40) at a given position. The phase angle may be 0° as illustrated in Fig. 6, 90°, or any other suitable angle.

It will be appreciated that the drive mechanism 20 may be similarly modified to harness more than two input forces, for example for use with a tandem bicycle designed for three or more riders, for a tandem bicycle which also includes a motor such as described above with reference to Fig. 5, etc., *mutatis mutandis.*

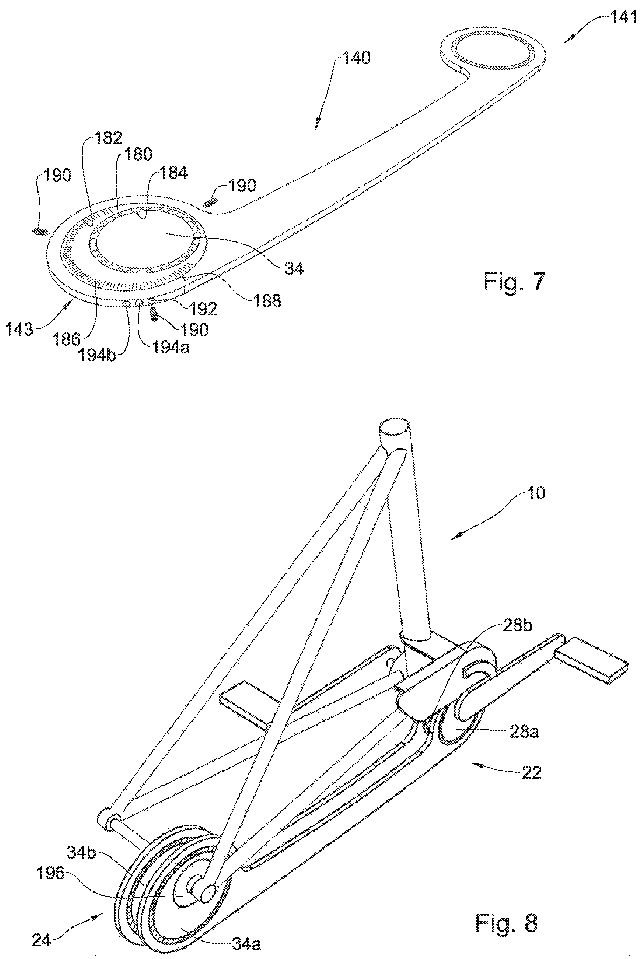

As illustrated in Fig. 7, an adjustable transmission member 140, configured to allow a user to alter the distance between the drive and wheel axes (not indicated in Fig. 7) thereof, may be provided. At least one of the front and rear ends 141, 143 thereof is provided with a round adjustment element 180, selectively rotatable within an accommodating aperture 182 formed in the end of the transmission member 140. The adjustment element 180 is formed with round plate-receiving aperture 184 for receiving a drive or wheel plate 28, 34 and formed eccentrically therewith, and comprises indicia 186 about at least a portion of its perimeter. A marker 188 is provided on the transmission member 140 adjacent the aperture 182. (Although the transmission member 140 is illustrated in Fig. 7 with a rear end 143 thereof provided with an adjustment element 180, it will be appreciated that it may also be provided with the front end 141 or both front and rear ends so provided, *mutatis mutandis.*)

The indicia 186 may be evenly spaced from one another, or spaced such that a rotation of the adjustment element 180 within the aperture 184 which advances it one indicium 186 (with relation to the marker 188) changes the distance between the drive and wheel axes 32, 38 a fixed amount, irrespective of the position of the adjustment element (i.e., the distances between adjacent indicia 186 is different along the perimeter of the adjustment mechanism, to account for the different changes in the distance between the drive and wheel axes at different angular positions of the adjustment mechanism).

The transmission member 140 further comprises a securing arrangement, such as set screws 190 (shown in an exploded view), received within through-going apertures 192 thereof, and optionally set-screw receiving apertures (not illustrated) formed on the perimeter of the adjustment element 180. The set-screw receiving apertures may be arranged so as to arrest the adjustment element 180 within the aperture at positions wherein the marker 188 is aligned with one of the indicia 186, thereby facilitating positioning the adjustment element at one of a discrete number of positions within the aperture 182.

According to a modification, the transmission member 140 may comprise auxiliary through-going apertures 194 (Fig. 7 illustrates an example wherein primary and secondary auxiliary through-going apertures 194a, 194b are provided), configured to facilitate arresting the adjustment element 180 at auxiliary positions, being between primary positions wherein the marker 188 is aligned with one of the indicia 186. This may be accomplished by providing the auxiliary through-going apertures 194 at positions which are angularly spaced from the primary through-going apertures 192 by an angle which is a non-integer multiple of the angular spacing between adjacent indicia 186. For example, if the indicia 186 are spaced from each other by 6°, each of the primary auxiliary through-going apertures 194a is provided at a position which is spaced, e.g., 8° (representing the non-integer multiple 1.33 of the angular spacing between adjacent indicia) from a corresponding primary through-going aperture 192, with each of the secondary auxiliary through-going apertures 194b being spaced 16° therefrom (i.e., 8° from the primary auxiliary through-going apertures 194a; representing the non-integer multiple of 2.66 of the angular spacing between indicia) thereby facilitating arresting the positioning element 180 at positions wherein the marker 188 is aligned one- or two-thirds between adjacent indicia, facilitating arresting the adjustment element 180 at two-degree increments.

It will be appreciated that additional sets of auxiliary through-going apertures 194 may be provided to facilitate arresting the positioning element 180 at one of two or more positions wherein the marker 188 is aligned between adjacent indicia 186. It will be further appreciated that the auxiliary through-going apertures 194 associated with a single position may each be spaced from a corresponding primary through-going aperture 192 by different amounts, the non-integer part of the multiple should be the same for all auxiliary through-going apertures 194 associated with the same position (i.e., multiples of 1.5, 2.5, and 3.5 within a single set, but not 1.5, 2.5, and 3.7).

It will be appreciated that the transmission members 40 may be provided with any other suitable arrangement to alter the distance between the drive and wheel axes. For example the transmission bars 45 may be made of two or more elements in screwing relationship to one another (not illustrated), wherein the distance between the drive and wheel axes may be adjusted by rotating one of these elements relative to another, e.g., during installation of the drive mechanism 20 on a cycle.

The drive mechanism 20 may be provided as part of a cycle 10, or by itself, for example as a kit configured to facilitate retrofitting an existing, e.g., chain-based cycle. Such a kit may be provided with an adjustable transmission member 140 such as described above with reference to and illustrated in Fig. 7, so as to allow a single kit to be suitable with cycle frames of difference sizes, such as those having difference distances between axes of rotation of their pedal-crank assemblies and rear wheels.

As illustrated in Fig. 8, the input and/or output assembly 22, 24 may comprise an integrated transmission element 196 (shown in the output assembly; reference to all elements will be to those associated with the output assembly, but explicitly includes corresponding elements associated with the input assembly), configured to provide a gearing ratio between the wheel plates 34 and, e.g., the rear wheel (not illustrated). The integrated transmission element 196 may comprise a gearbox, a planetary gear train, or any other suitable arrangement. It may provide a fixed gearing ratio, or may be controllable, e.g., by the rider, to selectively provide different gearing ratios. To accommodate the integrated transmission element 196, the wheel plates 34 may be larger than the drive plates 28, for example provided that the distance between the wheel points 36 and the wheel axis 38 is the same as the distance between the drive plates 30 and the drive axis 32.

According to some examples (not illustrated), the transmission system 26 may comprise three or more transmission members 40, with the input and output assemblies 22, 24 each comprising a similar number of drive/wheel plates 28, 34, etc., *mutatis mutandis.* The displacement angles associated with the input and output assemblies may be such that the drive/wheel points 30. 36 are evenly distributed, e.g., according to an example wherein the transmission system 26 comprises three rods, the drive/wheel displacement angles *θ_{d}*, *θ_{w}* may be 120°.

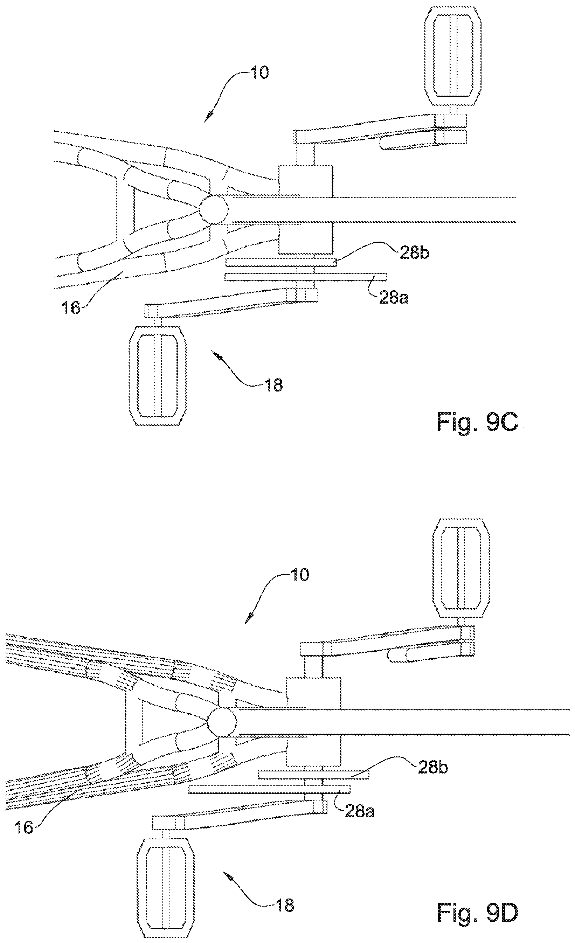

As illustrated in Figs. 9A and 9B, the drive mechanism 20 may be designed such that the drive and wheel plates 28, 34 received within the ends 41, 43 of one of the transmission members 40 are of a different size than those received within the ends 41, 43 of the other transmission member (i.e., one transmission member carries drive/wheel plates which are larger than those carried by the other). For clarity, only the drive plates 28 are illustrated in Figs. 9A and 9B, but it will be appreciated that the wheel plates 34 and transmission members 40 are correspondingly formed. As seen more clearly in Figs. 9C and 9D, providing plates 28, 34 of different diameters allows the plate which is disposed closer to the frame of the cycle 10 (e.g., the second drive plate 28b) to sweep out a smaller area than the one which is farther therefrom (e.g., the first drive plate 28a). This facilitates installation on a cycle 10 in which the chainstay 16 thereof curves outwardly from the pedal-crank assembly 18. According to this example, the pedal angle ϕ may be less than 45°.

It will be appreciated that not only may the drive and wheel plates 28, 34 received within the ends 41, 43 of one of the transmission members 40 be of a different size than those received within the ends 41, 43 of the other transmission member, but the radius of the eccentricity (i.e., the distance between the drive point 30 and drive axis 32) may be different for each of the drive plates 28a, 28b. Similarly, the radius of the eccentricity (i.e., the distance between the wheel point 36 and wheel axis 38) may be different for each of the wheel plates 34a, 34b. In addition, the diameter of each drive plate 28 may be different from that of its corresponding wheel plate 34 received within the same transmission member. However, the radius of eccentricity for the drive plate 28 received within each transmission member should be the same as that of its corresponding wheel plate 34 received within the same transmission member.

Those skilled in the art to which this invention pertains will readily appreciate that numerous changes, variations and modifications can be made without departing from the scope of the invention *mutatis mutandis.*

## Claims

1. A drive mechanism (20) for a cycle (10), the drive mechanism comprising an input assembly (22), an output assembly (24), and a transmission system (26) functionally connecting therebetween, wherein:
• said input assembly (22) defines a rotational drive axis (32) via which an input force is provided, and first and second drive points (30a, 30b) spaced from said drive axis, and is configured to harness said input force to produce an angular motion of said drive points about said drive axis, said input assembly comprising first and second drive plate members (28a, 28b) rigidly attached to each other, configured to rotate about said drive axis and each associated, respectively, with one of said first and second drive points;
• said output assembly (24) defines a rotational wheel axis (38) and first and second wheel points (36a, 36b) spaced from said wheel axis, and is configured for being driven by the angular motion of said drive points such that said wheel points rotate about said wheel axis, said output assembly comprising first and second wheel plate members (34a, 24b) rigidly attached to each other, configured to rotate about said wheel axis and each associated, respectively, with one of said first and second wheel points; and
• said transmission system (26) is configured for facilitating transmission of motion from said input assembly (22) to said output assembly (24), and comprises a first transmission member (40a) pivotally articulated, at a first end (41a) thereof, with respect to said first drive point (30a) and, at a second end thereof (43a), with respect to said first wheel point (36a), and a second transmission member (40b) pivotally articulated, at a first end (41b) thereof, with respect to said second drive point (30b) and, at a second end (43b) thereof, with respect to said second wheel point (36b), each of said transmission members being formed with a round plate-receiving aperture (42, 44) at each end thereof receiving one of said plate members (28, 34) therein, such that rotation of each drive plate member about the drive axis (32) operates a respective transmission member to rotate a corresponding wheel plate member about the wheel axis (38).

2. The drive mechanism (20) according to claim 1, further comprising a pedal-crank assembly (18) comprising two crank arms (50) rigidly connected to said input assembly (22) and configured for being borne on by a user to be rotated about an axis coincident with said drive axis (32).

3. The drive mechanism (20) according to claim 2, wherein said pedal-crank assembly (18) defines a pedal phase angle (ϕ) between:
• a longitudinal axis (18a) of one of said crank arms (50); and
• a line connecting said first drive point (30a) and said drive axis (32);
wherein said pedal phase angle is constant during use of the cycle.

4. The drive mechanism (20) according to any one of the preceding claims, wherein at least one of said plate members (28, 34) is formed as a disk and is coaxially fitted within its respective plate-receiving aperture.

5. The drive mechanism (20) according to claim 4, further comprising a friction-reducing arrangement configured to reduce friction between said at least one plate members (28, 34) and its respective plate-receiving aperture (42, 44).

6. The drive mechanism (20) according to claim 5, wherein said friction-reducing arrangement comprises a rolling-element bearing.

7. The drive mechanism (20) according to any one of the preceding claims, wherein the plate members (28, 34) received within one of said transmission members (40) is larger than the plate members received within the other of said transmission members.

8. The drive mechanism (20) according to any one of the preceding claims, further comprising a round adjustment element (180) rotatably received within an accommodating aperture (182) formed in an end (41, 43) of said transmission member (40), said adjustment element comprising the plate-receiving aperture (42, 44) formed eccentrically therein.

9. The drive mechanism (20) according to claim 8, configured for arresting said adjustment element (180) at a plurality of angular positions within said accommodating aperture (182).

10. The drive mechanism (20) according to any one of the preceding claims, wherein said first and second drive points (30a, 30b) are angularly separated from each other by a drive displacement angle (*θ_{d}*) between about 30° and about 150°.

11. The drive mechanism (20) according to claim 10, wherein said drive displacement angle (*θ_{d}*) is between about 45° and about 135°.

12. The drive mechanism (20) according to claim 11, wherein said drive displacement angle (*θ_{d}*) is between about 80° and about 100°.

13. The drive mechanism (20) according to claim 12, wherein said drive displacement angle (*θ_{d}*) is about 90°.

14. The drive mechanism (20) according to any one of claims 10 through 13, wherein said first and second wheel points (36a, 36b) are angularly separated from each other by a wheel displacement angle (*θ_{w}*) which is about the same as said drive displacement angle (*θ_{d}*).

15. A cycle (10) comprising a drive mechanism (20) according to any one of the preceding claims.

## Patentansprüche

1. Antriebsmechanismus (20) für ein Fahrrad (10), wobei der Antriebsmechanismus eine Eingabeanordnung (22), eine Ausgabeanordnung (24) und ein Übertragungssystem (26) umfasst, das funktionell dazwischen verbunden ist, wobei:
• die Eingabeanordnung (22) eine Dreh-Antriebsachse (32) definiert, über die eine Eingabekraft bereitgestellt wird, und einen ersten und einen zweiten Antriebspunkt (30a, 30b), die von der Antriebsachse beabstandet und konfiguriert sind, die Eingabekraft zur Erzeugung eine Winkelbewegung der Antriebspunkte um die Antriebsachse zu nutzen, wobei die Eingabeanordnung ein erstes und ein zweites Antriebsplattenelement (28a, 28b) aufweist, die steif aneinander befestigt und konfiguriert sind, sich um die Antriebsachse zu drehen, und einem der ersten bzw. zweiten Antriebspunkte zugeordnet sind,
• die Ausgabeanordnung (24) eine Dreh-Radachse (38) und einen ersten und einen zweiten Radpunkt (36a, 36b) definiert, die von der Radachse beabstandet sind, und konfiguriert ist, durch die Winkelbewegung der Antriebspunkte derart angetrieben zu werden, dass das Radpunkte sich um die Radachse drehen, wobei die Ausgabeanordnung erste und zweite Radplattenelemente (34a, 24b) umfasst, die steif aneinander befestigt und konfiguriert sind, sich um die Radachse zu drehen, und einem der ersten bzw. zweiten Radpunkte zugeordnet sind,
• das Übertragungssystem (26) konfiguriert ist, die Übertragung einer Bewegung von der Eingabeanordnung (22) zu der Ausgabeanordnung (24) zu erleichtern, und ein erstes Übertragungselement (40a), das an seinem ersten Ende (41a) in Bezug auf den ersten Antriebspunkt (30a) und an seinem zweiten Ende (43a) in Bezug auf den ersten Radpunkt (36a) drehbar angelenkt ist und ein zweites Übertragungselement (40b) umfasst, das an seinem ersten Ende (41b) in Bezug auf den zweiten Antriebspunkt (30b) und an seinem zweiten Ende (43b) in Bezug auf den zweiten Radpunkt (36b) drehbar angelenkt ist, wobei jedes der Übertragungselemente an jedem seiner Enden mit einer runden Platten-Aufnahmeöffnung (42, 44) ausgebildet ist, die eines der Plattenelemente (28, 34) darin aufnimmt, so dass eine Drehung jedes Antriebsplattenelements um die Antriebsachse (32) ein jeweiliges Übertragungselement betätigt, ein korrespondierendes Radplattenelement um die Radachse (38) zu drehen.

2. Antriebsmechanismus (20) nach Anspruch 1, der ferner eine Pedal-Kurbel-Anordnung (18) umfasst, die zwei Kurbelarme (50) umfasst, die starr mit der Eingabeanordnung (22) verbunden und konfiguriert sind, von einem Benutzer belastet zu werden, um um eine mit der Antriebsachse (32) koinzidente Achse gedreht zu werden.

3. Antriebsmechanismus (20) nach Anspruch 2, wobei die Pedal-Kurbel-Anordnung (18) einen Pedalphasenwinkel (ϕ) zwischen
• einer Längsachse (18a) eines der Kurbelarme (50) und
• einer den ersten Antriebspunkt (30a) und die Antriebsachse (32) verbindenden Linie definiert,
wobei der Pedalphasenwinkel während der Verwendung des Zyklus' konstant ist.

4. Antriebsmechanismus (20) nach einem der vorhergehenden Ansprüche, wobei mindestens eines der Plattenelemente (28, 34) als Scheibe ausgebildet und koaxial in seine jeweilige Plattenaufnahmeöffnung eingefügt ist.

5. Antriebsmechanismus (20) nach Anspruch 4, ferner umfassend eine reibungsmindernde Anordnung, die konfiguriert ist, Reibung zwischen dem mindestens einen Plattenelement (28, 34) und seiner jeweiligen Plattenaufnahmeöffnung (42, 44) zu verringern.

6. Antriebsmechanismus (20) nach Anspruch 5, wobei die reibungsmindernde Anordnung ein Wälzlager umfasst.

7. Antriebsmechanismus (20) nach einem der vorhergehenden Ansprüche, wobei die Plattenelemente (28, 34), die in einem der Übertragungselemente (40) aufgenommen sind, größer sind als die Plattenelemente, die in dem anderen der Übertragungselemente aufgenommen sind.

8. Antriebsmechanismus (20) nach einem der vorhergehenden Ansprüche, ferner umfassend ein rundes Einstellelement (180), das drehbar in einer Aufnahmeöffnung (182) aufgenommen ist, die in einem Ende (41, 43) des Übertragungselements (40) ausgebildet ist, wobei das Einstellelement die darin exzentrisch ausgebildete Plattenaufnahmeöffnung (42, 44) aufweist.

9. Antriebsmechanismus (20) nach Anspruch 8, der zum Arretieren des Einstellelements (180) in mehreren Winkelpositionen innerhalb der Aufnahmeöffnung (182) konfiguriert ist.

10. Antriebsmechanismus (20) nach einem der vorhergehenden Ansprüche, wobei der erste und der zweite Antriebspunkt (30a, 30b) durch einen Antriebsverschiebungswinkel (θd) zwischen ungefähr 30° und ungefähr 150° winkelmäßig voneinander getrennt sind.

11. Antriebsmechanismus (20) nach Anspruch 10, wobei der Antriebsverschiebungswinkel (θd) zwischen ungefähr 45° und ungefähr 135° liegt.

12. Antriebsmechanismus (20) nach Anspruch 11, wobei der Antriebsverschiebungswinkel (θd) zwischen ungefähr 80° und ungefähr 100° liegt.

13. Antriebsmechanismus (20) nach Anspruch 12, wobei der Antriebsverschiebungswinkel (θd) ungefähr 90° beträgt.

14. Antriebsmechanismus (20) nach einem der Ansprüche 10 bis 13, wobei der erste und der zweite Radpunkt (36a, 36b) durch einen Radverschiebungswinkel (θw) winkelmäßig voneinander getrennt sind, der in etwa gleich ist wie der Antriebsverschiebungswinkel (θd).

15. Fahrrad (10) mit einem Antriebsmechanismus (20) nach einem der vorhergehenden Ansprüche.

## Revendications

1. Mécanisme d'entraînement (20) pour un cycle (10), le mécanisme d'entraînement comprenant un ensemble d'entrée (22), un ensemble de sortie (24) et un système de transmission (26) se connectant de manière fonctionnelle entre eux, dans lequel :
• ledit ensemble d'entrée (22) définit un axe d'entraînement rotatif (32) par lequel une force d'entrée est fournie, et des premier et second points d'entraînement (30a, 30b) espacés dudit axe d'entraînement, et est configuré pour exploiter ladite force d'entrée pour produire un mouvement angulaire desdits points d'entraînement autour dudit axe d'entraînement, ledit ensemble d'entrée comprenant des premier et second éléments de plaque d'entraînement (28a, 28b) fixés rigidement l'un à l'autre, configurés pour tourner autour dudit axe d'entraînement et chacun associé, respectivement, avec l'un desdits premier et second points d'entraînement ;
• ledit ensemble de sortie (24) définit un axe de rotation de roue (38) et des premier et second points de roue (36a, 36b) espacés dudit axe de roue, et est configuré pour être entraîné par le mouvement angulaire desdits points d'entraînement de telle sorte que lesdits points de roue tournent autour dudit axe de roue, ledit ensemble de sortie comprenant des premier et second éléments de plaque de roue (34a, 24b) fixés rigidement l'un à l'autre, configurés pour tourner autour dudit axe de roue et chacun associé, respectivement, à l'un desdits premier et second points de roue ; et
• ledit système de transmission (26) est configuré pour faciliter la transmission du mouvement dudit ensemble d'entrée (22) audit ensemble de sortie (24), et comprend un premier élément de transmission (40a) articulé de manière à pouvoir pivoter, au niveau d'une première extrémité (41a) de celui-ci, par rapport audit premier point d'entraînement (30a) et, au niveau d'une seconde extrémité de celui-ci (43a), par rapport audit premier point de roue (36a), et un second élément de transmission (40b) articulé de manière à pouvoir pivoter, au niveau d'une première extrémité (41b) de celui-ci, par rapport audit second point d'entraînement (30b) et, au niveau d'une seconde extrémité (43b) de celui-ci, par rapport audit second point de roue (36b), chacun desdits éléments de transmission étant formé avec une ouverture de réception de plaque ronde (42, 44) à chaque extrémité de celui-ci recevant l'un desdits éléments de plaque (28, 34) à l'intérieur, de sorte que la rotation de chaque élément de plaque d'entraînement autour de l'axe d'entraînement (32) actionne un élément de transmission respectif pour faire tourner un élément de plaque de roue correspondant autour de l'axe de roue (38).

2. Mécanisme d'entraînement (20) selon la revendication 1, comprenant en outre un ensemble pédalier-manivelle (18) comprenant deux bras de manivelle (50) reliés rigidement audit ensemble d'entrée (22) et configuré pour être supporté par un utilisateur pour être tourné autour d'un axe coïncidant avec ledit axe d'entraînement (32).

3. Mécanisme d'entraînement (20) selon la revendication 2, dans lequel ledit ensemble pédalier-manivelle (18) définit un angle de phase de pédale (*ϕ*) entre :
• un axe longitudinal (18a) de l'un desdits bras de manivelle (50) ; et
• une ligne reliant ledit premier point d'entraînement (30a) et ledit axe d'entraînement (32) ;
dans lequel ledit angle de phase de pédale est constant pendant l'utilisation du cycle.

4. Mécanisme d'entraînement (20) selon l'une quelconque des revendications précédentes, dans lequel au moins un desdits éléments de plaque (28, 34) est formé sous forme d'un disque et est ajusté coaxialement à l'intérieur de son ouverture de réception de plaque respective.

5. Mécanisme d'entraînement (20) selon la revendication 4, comprenant en outre un agencement de réduction de friction configuré pour réduire la friction entre ledit au moins un élément de plaque (28, 34) et son ouverture de réception de plaque respective (42, 44).

6. Mécanisme d'entraînement (20) selon la revendication 5, dans lequel ledit agencement de réduction de friction comprend un palier à roulement.

7. Mécanisme d'entraînement (20) selon l'une quelconque des revendications précédentes, dans lequel les éléments de plaque (28, 34) reçus à l'intérieur de l'un desdits éléments de transmission (40) sont plus grands que les éléments de plaque reçus à l'intérieur de l'autre élément parmi lesdits éléments de transmission.

8. Mécanisme d'entraînement (20) selon l'une quelconque des revendications précédentes, comprenant en outre un élément de réglage rond (180) reçu en rotation dans une ouverture de logement (182) formée dans une extrémité (41, 43) dudit élément de transmission (40), ledit élément de réglage comprenant l'ouverture de réception de plaque (42, 44) formée de manière excentrique à l'intérieur.

9. Mécanisme d'entraînement (20) selon la revendication 8, configuré pour arrêter ledit élément de réglage (180) à une pluralité de positions angulaires à l'intérieur de ladite ouverture de logement (182).

10. Mécanisme d'entraînement (20) selon l'une quelconque des revendications précédentes, dans lequel lesdits premier et second points d'entraînement (30a, 30b) sont angulairement séparés l'un de l'autre par un angle de déplacement d'entraînement (*θ_{d}*) compris entre environ 30 ° et environ 150 °.

11. Mécanisme d'entraînement (20) selon la revendication 10, dans lequel ledit angle de déplacement d'entraînement (*θ_{d}*) est compris entre environ 45 ° et environ 135 °.

12. Mécanisme d'entraînement (20) selon la revendication 1, dans lequel ledit angle de déplacement d'entraînement (*θ_{d}*) est compris entre environ 80 ° et environ 100 °.

13. Mécanisme d'entraînement (20) selon la revendication 12, dans lequel ledit angle de déplacement d'entraînement (*θ_{d}*) est d'environ 90 °.

14. Mécanisme d'entraînement (20) selon l'une quelconque des revendications 10 à 13, dans lequel lesdits premier et second points de roue (36a, 36b) sont angulairement séparés l'un de l'autre par un angle de déplacement de roue (*θ_{w}*) qui est à peu près le même que ledit angle de déplacement d'entraînement (*θ_{d}*).

15. Cycle (10) comprenant un mécanisme d'entraînement (20) selon l'une quelconque des revendications précédentes.
